# EUROPEAN PATENT SPECIFICATION

(11) **EP 2 321 541 B1**
(45) Date of publication and mention of the grant of the patent: **02.10.2013**
(21) Application number: 09810314.6
(22) Date of filing: 27.08.2009
(51) Int. Cl.: A47G 25/06, A47F 5/08, B60R 7/10

(54) **FASTENING ARRANGEMENT**
BEFESTIGUNGSANORDNUNG
AGENCEMENT DE FIXATION

(30) Priority: 01.09.2008 SE 0801879
(43) Date of publication of application: 18.05.2011
(73) Proprietor: Scania CV AB (PUBL), 151 87 Södertälje (SE)
(72) Inventor: LANG, Christer, S-618 30 Kolmården (SE)
(86) International application number: PCT/SE2009/050964
(87) International publication number: WO 2010/024764

(56) References cited:
- GB-A- 884 815
- US-A- 2 542 753
- US-A- 2 836 216
- US-A1- 2009 256 372

## Description

### TECHNICAL FIELD

The invention relates to a fastening arrangement comprising an aperture delineated in a wall portion and an article adapted to being connected to the aperture by elastic locking protrusions of the article which are directed away from one another and engage with a rear side of the wall portion, and a clear space of the aperture for allowing first the introduction of a first of the locking protrusions through the aperture at a first end of the aperture and thereafter the introduction of the second locking protrusion through the clear space at an opposite second end of the aperture. The invention relates also to a wall portion and a connection unit for such a fastening arrangement.

### BACKGROUND

In such a known fastening arrangement (DE 4333479 A1), the locking protrusions engage only with inner corner regions of the opposite ends of the aperture and are then relatively easy to disengage by the article being moved across the clear space in a disengaging direction parallel with the plane of the aperture so that the lower locking protrusion is released from engagement and allows the article to be removed from the aperture. Such an arrangement is easy to fit without the use of tools and is of sufficient strength to withstand loading in the opposite direction to the disengaging direction. In certain situations, however, a more permanent fastening arrangement which is in principle equally easy to fit but not as easy to push back in the disengaging direction may be desired.

### SUMMARY OF THE INVENTION

An object of the invention is therefore to propose a fastening arrangement indicated in the preamble of claim 1 whereby the article can be locked against movement in a disengaging direction.

According to the invention, a locking surface at the rear side of the wall portion is adapted for engagement with the first locking protrusion and for prevention of reverse movement of the article when the article has been moved along the aperture across the clear space for engagement of the second locking protrusion at the rear side of the wall portion. The article in the fitted state can thus be locked against movement back to a releasing position. The arrangement is then also usable for secure fastening of articles which may be subject to relatively large alternating forces in opposite directions.

Although other embodiments are possible, the locking surface in an embodiment is delineated on a locking recess at the rear side of the wall portion.

According to an embodiment of the invention, the locking surface is arranged on a thickened region at the rear side of the wall portion. This may be advantageous if the thickness of the wall portion is too small to provide a sufficiently large locking surface.

According to another embodiment, the locking surface is arranged on a separate connection unit at the rear side of the wall portion. This may be advantageous if, for example, the wall portion is made of flexible material.

Other features and advantages of the invention may be indicated by the claims and the description of embodiment examples set out below.

### BRIEF DESCRIPTION OF THE DRAWINGS

FIG. 1A is a view obliquely from the rear of an arrangement according to the invention comprising an extracted wall section and an article which is to be connected to the wall section;
FIG. 1B is a view obliquely from in front approximately corresponding to FIG. 1;
FIG. 2A-D are side views, partly in section, illustrating a process of connecting the article to the wall section;
FIG. 3A-B are side views, partly in section, illustrating a process of connecting an article to an alternatively configured wall section; and
FIG. 4 depicts a view obliquely from the rear of a separate unit forming part of an arrangement according to the invention.

### DETAILED DESCRIPTION OF EMBODIMENT EXAMPLES

A fastening arrangement according to the invention comprises a wall section 10 to which an article 30, e.g. a clothes hanger with a hook 32, can be connected.

In the wall section 10, an elongate aperture 12 is provided to accommodate a pair of elastic locking protrusions 44, 46 of a locking element 40 formed at a rear side 34 of the article 30. The locking protrusions 44, 46 extend hooklike away from one another from a base 42 at the rear side 34 of the article 30 in order, when the article 30 is fitted, to engage with the rear side of the wall section 10 and fasten the article 30 to the wall section 10.

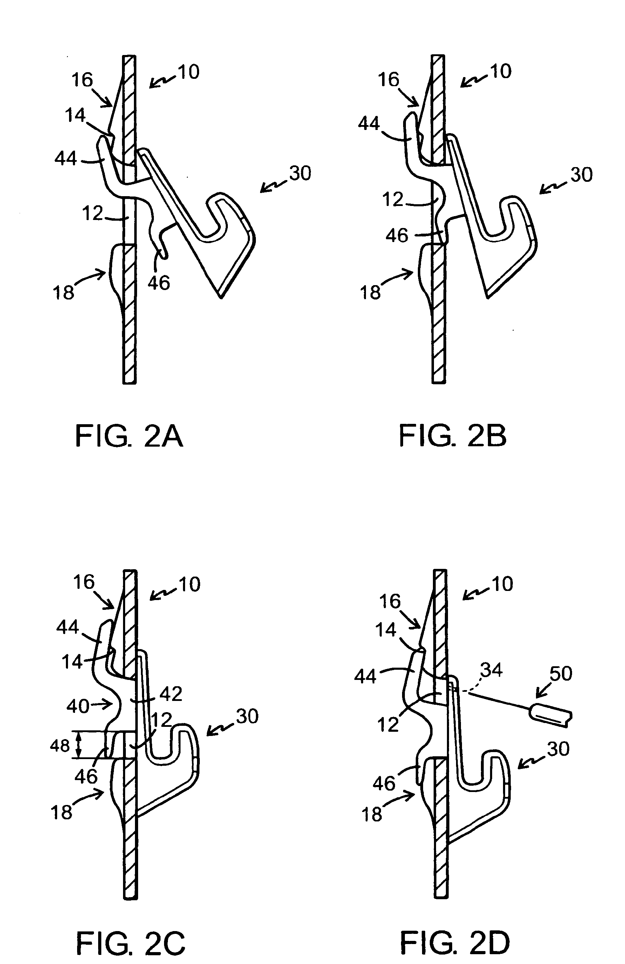

As illustrated in more detail in FIGS. 2A-D, the aperture 12 is of sufficient length to allow the second locking protrusion 46 to enter (FIG. 2B) through the aperture 12 after the first locking protrusion 44 has already been introduced at a first end of the aperture 12. When the second locking protrusion 46 has thus been introduced through the aperture 12, there is therefore a clear space 48 between the base 42 of the locking element 40 and the second end of the aperture 12. Fitting is completed by the article 30 being moved across the clear space 48 towards the second end of the aperture 12. The second locking protrusion 46 thus comes into engagement with the rear side of the wall section 10 while at the same time the first locking protrusion 44 engages, by spring action, in a locking recess 14 at the rear side of the wall section 10.

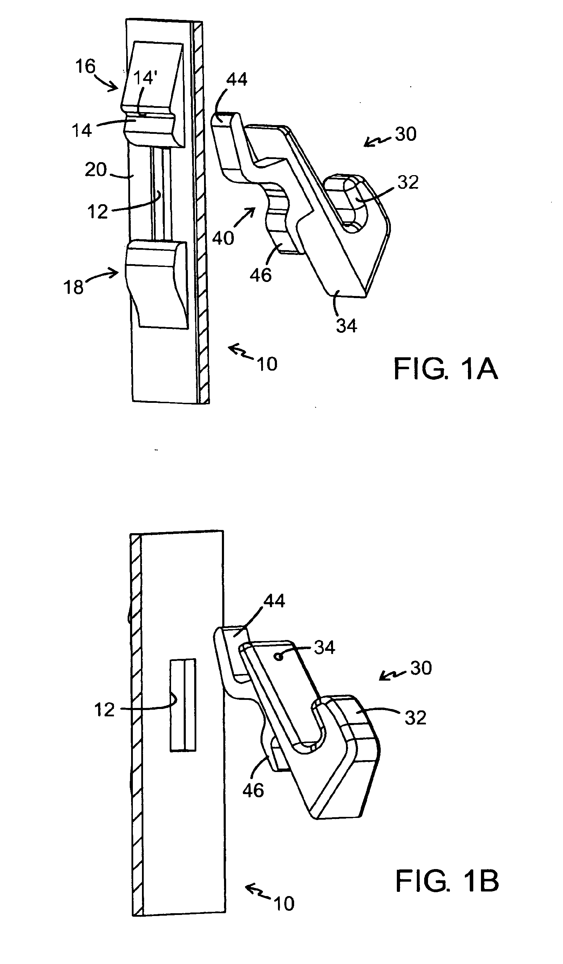

In the embodiment according to FIGS. 1 and 2, the rear side of the wall portion 10 is provided with thickened regions 16 and 18 for engagement with the respective locking protrusions 44 and 46. The regions 16, 18 may be integral with the wall portion 10.

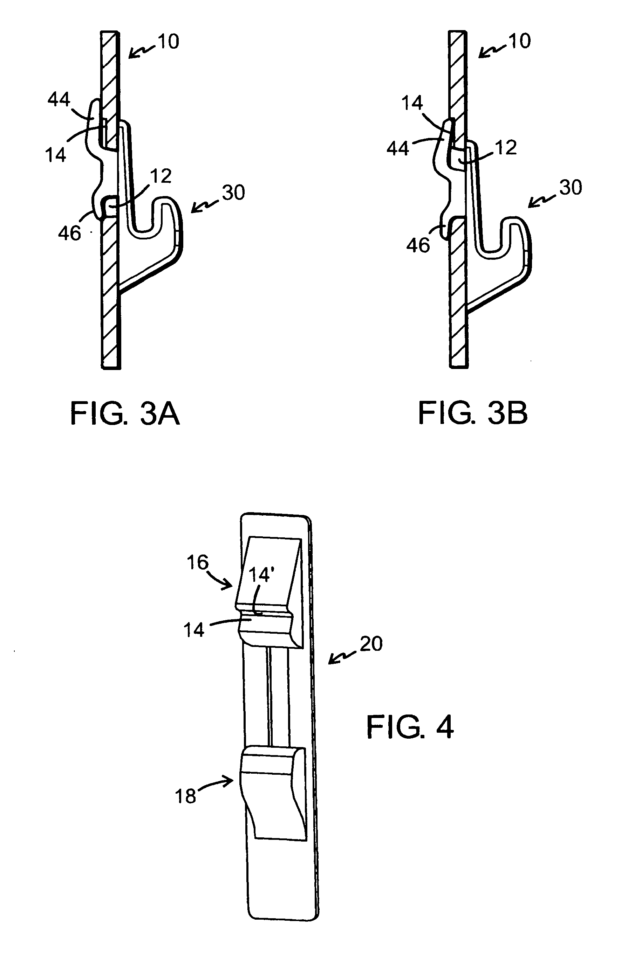

This version with the regions 16 and 18 may also be advantageous if the wall portion 10 is otherwise made of flexible material, e.g. fabric or cloth. The regions 16, 18 may then be firmly connected in some suitable manner, e.g. by adhesive bonding, to the rear side of the wall portion 10. As illustrated in FIG. 1A, they may also be formed on a thin panel 20 which may be firmly connected to the rear side of the wall portion 10. As illustrated in FIG. 4, however, the panel 20 with the regions 16, 18 may also be a separate loose connection unit which is applied behind the aperture (not depicted) at the time of fitting the article.

In the embodiment according to FIGS. 3A and B, however, the locking protrusions 44, 46 engage directly with the rear side of the wall portion 10. In this case the rear side may be entirely planar apart from the locking recess 14, which is here a recess in the actual wall portion. The locking recess 14 need not necessarily extend as far as the aperture 12, as it may also be a bottoming recess delineated all round (not depicted). The aforesaid separate connection unit may of course also be approximately like the wall portion in FIGS. 3A and B, i.e. with the locking recess but without the thickened regions 16, 18.

The fastening arrangement according to the invention need not necessarily be permanently connectable, as it may be configured in various ways to be releasable. One way might be to so configure the second locking protrusion 46 by dimensioning and choice of material that it gives way elastically and withdraws through the aperture 12 when sufficient extracting force is applied to a lower portion of the article 30. Another way might be to form a locking surface or shoulder 14' (FIG. 1A) of the locking recess 14 with such a slight slope that the first locking protrusion 44 can slide back to the position according to FIG. 2A when sufficient upward force is applied to the article 30. Yet another way might be to provide the article 30 with a hole 34 running through it (FIGS. 1B, 2D) in which a rodlike tool 50 (FIG. 2D) may be inserted to push the first locking protrusion 44 away from the locking recess 14 when the fastening arrangement is to be released.

The aforesaid locking surface 14' need not necessarily be delineated on a locking recess but may also be defined as a locking surface on a protruding locking tab.

The description set out above is primarily intended to facilitate comprehension and no unnecessary limitations of the invention are to be inferred therefrom. The modifications which will be obvious to one skilled in the art from perusing the description may be effected without departing from the invention as defined in the claims set out below.

## Claims

1. A fastening arrangement comprising an aperture (12) delineated in a wall portion (10) and an article (30) adapted to be connected to the aperture by elastic locking protrusions (44, 46) of the article which are directed away from one another and engage with a rear side of the wall portion, and a clear space (48) of the aperture is adapted to first receive a first (44) of the locking protrusions through the aperture (12) at a first end of the aperture and thereafter receive the second locking protrusion (46) through the clear space (48) at an opposite second end of the aperture, **characterised by** a locking surface (14') at the rear side of the wall portion (10) which is adapted for engagement with the first locking protrusion (44) and for prevention of reverse movement of the article when the article has been moved along the aperture (12) across the clear space (48) for engagement of the second locking protrusion (46) at the rear side of the wall portion (10).

2. A fastening arrangement according to claim 1, in which the locking surface (14') is delineated on a locking recess (14) at the rear side of the wall portion (10).

3. A fastening arrangement according to claim 2, in which the locking surface (14') is arranged on a thickened region at the rear side of the wall portion (10).

4. A fastening arrangement according to any one of claims 1-3, in which the locking surface (14') is arranged on a separate connection unit (20) at the rear side of the wall portion (10).

## Patentansprüche

1. Befestigungsanordnung umfassend eine Öffnung (12), die in einem Wandteil (10) liegt, und einen Gegenstand (30), der geeignet ist, durch elastische Verriegelungsvorsprünge (44, 46) des Gegenstands, die voneinander weg zeigen und an einer Rückseite des Wandteils eingreifen, an der Öffnung befestigt zu werden, und wobei ein Freiraum (48) der Öffnung geeignet ist, zuerst einen ersten (44) der Verriegelungsvorsprünge durch die Öffnung (12) an einem ersten Ende der Öffnung aufzunehmen und danach den zweiten Verriegelungsvorsprung (46) durch den Freiraum (48) an einem gegenüberliegenden Ende der Öffnung aufzunehmen,
**gekennzeichnet durch** eine Verriegelungsfläche (14') an der Rückseite des Wandteils (10), die zum Eingreifen mit dem ersten Verriegelungsvorsprung (44) und zum Verhindern einer entgegengesetzten Bewegung des Gegenstands geeignet ist, wenn der Gegenstand entlang der Öffnung (12) über den Freiraum (48) zum Eingreifen des zweiten Verriegelungsvorsprungs (46) an der Rückseite des Wandteils (10) bewegt worden ist.

2. Befestigungsanordnung gemäß Anspruch 1, in der die Verriegelungsfläche (14') auf einer Verriegelungsausnehmung (14) an der Rückseite des Wandteils (10) liegt.

3. Befestigungsanordnung gemäß Anspruch 2, in der die Verriegelungsfläche (14') auf einem verstärkten Bereich an der Rückseite des Wandteils (10) angeordnet ist.

4. Befestigungsanordnung gemäß einem der Ansprüche 1-3, in der die Verriegelungsfläche (14') auf einer separaten Verbindungseinheit (20) an der Rückseite des Wandteils (10) angeordnet ist.

## Revendications

1. Dispositif de fixation comprenant une ouverture (12) définie dans une partie de paroi (10) et un article (30) apte à être fixé à l'ouverture par des saillies de verrouillage élastiques (44, 46) de l'article qui sont dirigées à l'opposé et qui entrent en prise avec une face arrière de la partie de paroi, un espace libre (48) de l'ouverture étant adapté pour recevoir tout d'abord une première (44) des saillies de verrouillage à travers l'ouverture (12), à une première extrémité de l'ouverture, et pour recevoir ensuite à travers l'espace libre (48) la seconde saillie de verrouillage (46) à la seconde extrémité, ou extrémité opposée, de l'ouverture, **caractérisé par** une surface de verrouillage (14') située sur la face arrière de la partie de paroi (10) qui est adaptée pour entrer en prise avec la première saillie de verrouillage (44) et pour empêcher le mouvement inverse de l'article lorsque l'article est déplacé le long de l'ouverture (12) sur la longueur de l'espace libre (48) pour mettre la seconde saillie de verrouillage (46) en prise sur la face arrière de la partie de paroi (10).

2. Dispositif de fixation selon la revendication 1, dans lequel la surface de verrouillage (14') est définie sur une encoche de verrouillage (14) située sur la face arrière de la partie de paroi (10).

3. Dispositif de fixation selon la revendication 2, dans lequel la surface de verrouillage (14') est prévue sur une région épaissie située sur la face arrière de la partie de paroi (10).

4. Dispositif de fixation selon l'une quelconque des revendications 1 à 3, dans lequel la surface de verrouillage (14') est prévue sur une unité d'assemblage séparée (20) située sur la face arrière de la partie de paroi (10).
